# EUROPÄISCHE PATENTSCHRIFT

(11) **EP 2 431 566 B1**
(45) Veröffentlichungstag und Bekanntmachung des Hinweises auf die Patenterteilung: **10.07.2013**
(21) Anmeldenummer: 10176827.3
(22) Anmeldetag: 15.09.2010
(51) Int. Cl.: E21B 17/00, F16L 47/24

(54) **Verfahren zum Herstellen eines Bohrrohrs, Adapter für ein Bohrrohr und Bohrrohr**
Method for producing a drill pipe, adapter for a drill pipe and drill pipe
Procédé de fabrication d'un tuyau de forage, adaptateur pour un tuyau de forage et tuyau de forage

(43) Veröffentlichungstag der Anmeldung: 21.03.2012
(73) Patentinhaber: TPR Fiberdur GmbH & Co. KG, 52457 Aldenhoven (DE)
(72) Erfinder: Stötzel, Michael, 57271 Hilchenbach (DE); Focke, Hans-Karl, 52134 Herzogenrath (DE)
(74) Vertreter: Bauer, Dirk

(56) Entgegenhaltungen:
- WO-A1-2007/145533
- WO-A1-2009/038513
- US-A- 4 407 528
- US-A- 4 647 078
- US-A- 4 810 010
- US-A- 5 236 018
- US-A- 5 332 049
- US-A- 5 406 983

## Beschreibung

Die Erfindung betrifft zum Ersten ein Verfahren zum Herstellen eines Bohrrohrs, das beim Bohren eines Bohrlochs derart in ein Deckgebirge treibbar ist, dass es das Bohrloch offen hält, wobei das Bohrrohr ein Rohrelement aus Kunststoff aufweist, wobei mittels des Bohrrohrs über einen Adapter aus Metall, der mit dem Rohrelement verbunden ist, weitere Bohrrohre in das Bohrloch treibbar sind, und wobei das Rohrelement mit einem Verbindungsstutzen des Adapters vergossen wird, zum Zweiten einen Adapter für ein solches Bohrrohr und zum Dritten ein solches Bohrrohr.

Ein Verfahren, ein Adapter und ein Bohrrohr der einleitend genannten Art sind aus US 5,542,483 bekannt: Der Verbindungsstutzen des erfindungsgemäßen Adapters weist eine Mehrzahl von radialen Bohrungen auf. Beim Herstellen des Bohrrohres durchdringt der Kunststoff in diesen Bohrungen den Verbindungsstutzen. Das Rohrelement und der Verbindungsstutzen lassen sich nach dem Erstarren des Kunststoffes nicht mehr zerstörungsfrei trennen.

Derartige Bohrrohre kommen zum Einsatz, wenn durch ein Deckgebirge ein Bohrloch zum Fördern eines flüssigen oder gasförmigen Guts aus einem unterirdischen Lager oder in ein unterirdisches Lager niedergebracht wird. Der Bohrer wird einerseits in dem Bohrrohr geführt, andererseits wird das Bohrrohr mit dem vordringenden Bohrer bis zum Erreichen des Lagers kontinuierlich oder stoßweise vorgeschoben.

Die bekannten Bohrrohre sind den beim Vorschieben auftretenden Lasten nur eingeschränkt gewachsen: Umfangskräfte und vor allem axiale Kräfte werden zwischen Adapter und Rohrelement im Wesentlichen nur an vergleichsweise kleinen Kontaktstellen in den Bohrungen des Verbindungsstutzens übertragen. Die nach der Herstellung zunächst aufeinander haftenden Umfangsflächen des Rohrelements und des Verbindungsstutzens übertragen nur zu Beginn Axialkräfte, weil sich das Rohrelement beim Niederbringen des Bohrrohrs in das Bohrloch radial aufweitet und so die Kontaktkräfte zwischen Adapter und Rohrelement sinken.

Die hohe Belastung insbesondere des Kunststoffes an diesen Kontaktstellen kann sowohl zu frühem Bauteilversagen während der Bohrung führen, als auch die Alterung des Kunststoffs und die Entstehung von Undichtigkeiten im nachfolgenden Betrieb beschleunigen.

### Aufgabe

Der Erfindung liegt die Aufgabe zugrunde, eine belastbare Verbindung zwischen Rohrelement und Adapter herzustellen.

### Lösung

Ausgehend von den bekannten Verfahren wird nach der Erfindung vorgeschlagen, dass vor dem Gießen den Rohrelements mindestens ein textiles Verstärkungselement um den Verbindungsstutzen gelegt und mit dem Kunststoff getränkt wird. Das textile Verstärkungselement verstärkt die Belastbarkeit des Rohrelements durch Axialkräfte und vermindert dessen radiale Aufweitung unter axialer Last. Die Belastbarkeit der Verbindung zwischen Rohrelement und Adapter ist so signifikant verbessert. Das Verstärkungselement kann beispielsweise aus Glas-, Karbon-, Keramik-, Stahl- oder Aramidfasern bestehen und in einzelnen Filamenten, als Garn oder als Gewebe um den Verbindungsstutzen gelegt werden. Garne oder Gewebe können derart ausgelegt werden, dass der flüssige Kunststoff durch die Kapillarkräfte zwischen den Fasern das Verstärkungselement durchdringt. Das Verstärkungselement kann in einem oder mehreren Stücken um den Verbindungsstutzen gewickelt werden. Der Adapter weist mindestens eine außen auf dem Verbindungsstutzen umlaufenden Wulst auf, die mehrfach breiter ist als einer der Gänge.

Das textile Verstärkungselement kann durch Übergießen mit oder durch Tauchen in dem Kunststoff oder durch eine Kombination beider Möglichkeiten mit dem Kunststoff getränkt werden.

Vorzugsweise wird im Rahmen eines erfindungsgemäßen Verfahrens das Verstärkungselement in der Art auf den Verbindungsstutzen gelegt, dass eine Faserrichtung des Verstärkungselements im Wesentlichen parallel zu Gängen mindestens einer außen auf dem Verbindungsstutzen umlaufenden Nut verläuft. Nach dem Erstarren des Rohrelements werden axiale Kräfte zwischen Rohrelement und Verbindungsstutzen in dem Kontakt zwischen der Nut und dem Verstärkungselement in Längskräfte in den darin liegenden Fasern umgesetzt. Die Verbindung ist dadurch in Axialrichtung wiederum signifikant höher belastbar.

Bevorzugt wird im Rahmen eines erfindungsgemäßen Verfahrens zudem das Verstärkungselement in mehreren Lagen übereinander gelegt. Jede weitere Lage des Verstärkungselements vergrößert die axiale Belastbarkeit der Verbindung. Insbesondere kann zwischen benachbarten Lagen die Faserrichtung des Verstärkungselements wechseln. Die geringere Belastbarkeit des Faserverbunds in Richtungen, die nicht einer Faserrichtung entsprechen, wird so ausgeglichen.

Ausgehend von den bekannten Adaptern wird nach der Erfindung vorgeschlagen, dass außen auf dem Verbindungsstutzen in einer Mehrzahl von parallelen Gängen mindestens eine Nut umläuft. Ein solcher erfindungsgemäßer Adapter ermöglicht die Herstellung eines Bohrrohrs nach einem erfindungsgemäßen Verfahren und zeichnet sich durch die für ein solches Verfahren beschriebenen Vorteile aus. An einem erfindungsgemäßen Adapter können Ringnuten in axialer Richtung hintereinander liegen oder eine oder mehrere Nuten als (ein- oder mehrgängiges) Gewinde ausgebildet sein. Auch ein Wechsel zwischen Ringnuten und Gewindeabschnitten oder Gewinden mit unterschiedlichen Steigungen, Teilungen und Gangzahlen ist möglich.

Auch auf der Wulst sind vorteilhafter Weise Nuten ausgebildet. Die Wulst kann als Ringwulst oder gewendelt ausgebildet sein und gleichläufig oder mit unterschiedlicher Steigung gegenüber den Gängen verlaufen.

Besonders bevorzugt verläuft an einem erfindungsgemäßen Adapter eine äußere Umfangsfläche des Verbindungsstutzens konisch. So werden sprunghafte Übergänge der Materialdicken sowohl im Rohrelement als auch im Verbindungsstutzen vermieden, die im Betrieb besonderen Lasten ausgesetzt sind.

Ausgehend von den bekannten Bohrrohren wird nach der Erfindung vorgeschlagen, dass der Adapter ein erfindungsgemäßer Adapter ist.

An einem erfindungsgemäßen Bohrrohr ist vorzugsweise der Adapter mit einem zweiten Adapter an einem zweiten Bohrrohr derart kombinierbar, dass das Bohrrohr und das zweite Bohrrohr verdrehfest verbunden sind. Die beiden Adapter sind beispielsweise jeweils rotationssymmetrisch um die Längsachse des Bohrrohrs als Zapfen- ("male") und Muffenadapter ("female") ausgeführt.

Besonders bevorzugt weist der Adapter ein Innengewinde und der zweite Adapter ein mit dem Innengewinde kombinierbares Außengewinde auf. Über den Adapter können dann auch Zug- und Umfangskräfte auf das zweite Bohrrohr übertragen werden.

### Ausführungsbeispiel

Die Erfindung wird nachfolgend anhand eines Ausführungsbeispiels erläutert. Es zeigen
Fig. 1a und 1b ein erfindungsgemäßes Bohrrohr,
Fig. 2a bis 2d einen erfindungsgemäßen Adapter dieses Bohrrohrs und
Fig. 3 a und 3bzwei andere erfindungsgemäße Adapter.

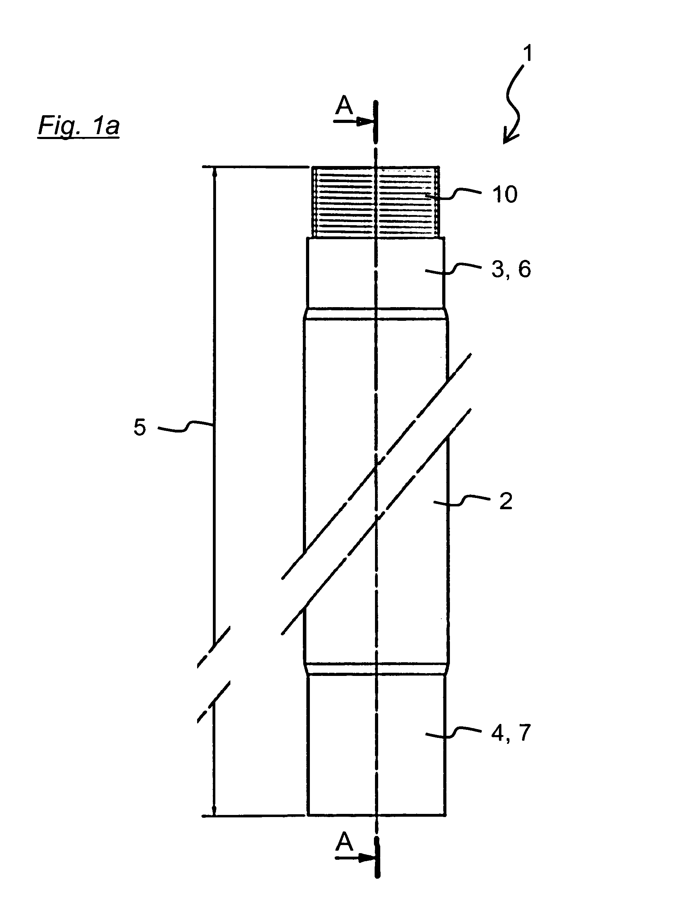

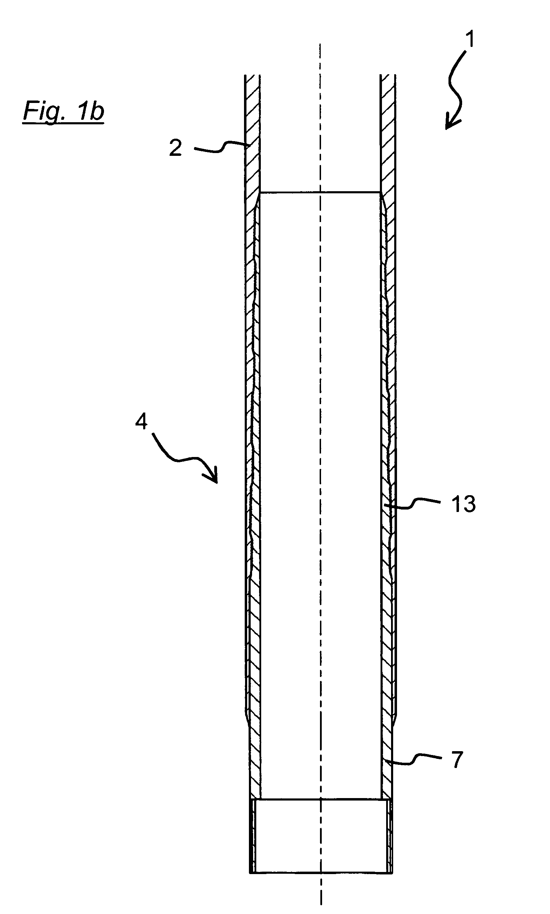

Das in Figur 1 gezeigte erfindungsgemäße Bohrrohr 1 weist ein Rohrelement 2 aus einem faserverstärkten Kunststoff (hier: ein glasfaserverstärktes Epoxidharz) und zwei Adapter 3, 4 aus Metall (hier: Edelstahl) auf.

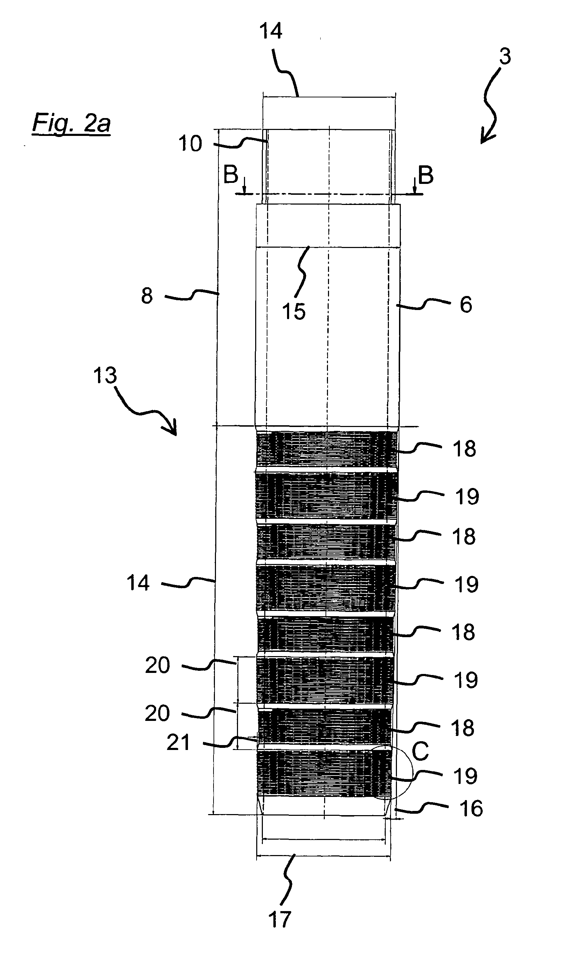

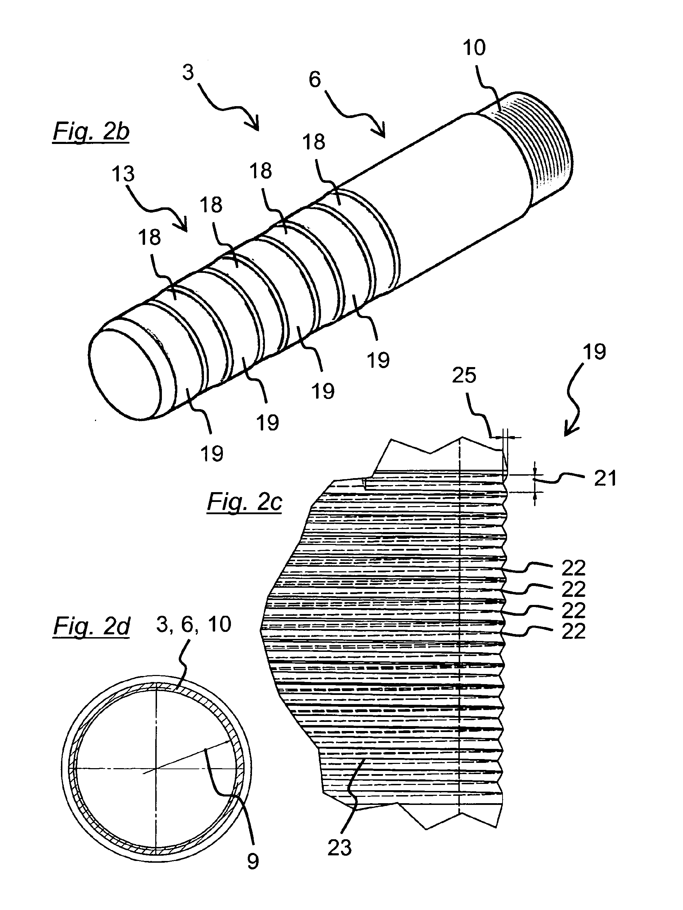

Das in Figur 1 a in einer Draufsicht und den dort mit "A—A" gekennzeichneten Längsschnitt teilweise in Figur 1b dargestellte Bohrrohr 1 weist eine Länge 5 von ca. 10 m und einen Nenndurchmesser von 200 mm auf. Der in Figur 2a in einer Draufsicht, in Figur 2b noch einmal einzeln in einer perspektivischen Ansicht dargestellte erste Adapter 3 (ein "male" oder "Zapfenadapter") sowie der zweite Adapter 4 (ein "female" oder "Muffenadapter") weisen jeweils einen teilweise aus dem Rohrelement 2 herausragenden Kontaktstutzen 6, 7 mit einer Länge 8 von ca. 400 mm und einem Innendurchmesser 9 von etwa 160 mm auf.

Der erste Kontaktstutzen 6 des ersten Adapters 3 weist ein Außengewinde 10 auf, das in dem in Figur 2a mit "B—B" gekennzeichneten Schnitt in Figur 2d im Detail dargestellt ist. Der zweite Kontaktstutzen 7 des zweiten Adapters 4 weist ein Innengewinde 11 auf. Das Außengewinde 10 und das Innengewinde 11 weisen einen Gewindedurchmesser 12 von 182,55 mm auf.

Die Adapter 3, 4 weisen darüber hinaus jeweils einen Verbindungsstutzen 13 mit einer Länge 14 von ca. 500 mm auf. Die Verbindungsstutzen 13 laufen ausgehend von dem Durchmesser 15 des Kontaktstutzens 6, 7 von 190 mm mit einem Konuswinkel 16 von 0,92° bis zu einem Durchmesser 17 von 176 mm konisch zu. Die Verbindungsstutzen 13 weisen je vier Einschnitte 18 und darauf folgende Wulste 19 mit einer Breite 20 von je 62,5 mm auf. Die Wulste 19 sind gegenüber dem vorherigen Einschnitt 18 jeweils um einen radialen Abstand 21 von 2 mm erhaben.

Auf den Wulsten 19 läuft, wie in dem in Figur 2a mit "C" gekennzeichneten und in Figur 2c einzeln dargestellten Detail ersichtlich, in jeweils 16 Gängen 22 eine gewendelte Nut 23 um, in den Einschnitten 18 in elf Gängen 22. Die Gänge 22 weisen einen Abstand 24 von 4 mm und eine Nuttiefe 25 von 1 mm auf.

Zur Herstellung des Bohrrohrs 1 werden die Adapter 3, 4 auf einen Träger mit dem gewünschten Innendurchmesser 9 des Bohrrohrs 1 montiert und mit einem textilen Verstärkungselement (einem "Roving") aus einzelnen Glasfilamenten umwickelt. Der Träger, das Verstärkungselement und die Glasfilamente sind nicht dargestellt. Die Glasfilamente werden hierbei in einer ersten Lage um den ersten Verbindungsstutzen 13 in die Gänge 22 der Nuten 23 eingelegt, die erste Lage wird über den Träger bis zu dem zweiten Verbindungsstutzen 13 fortgeführt und auch dort in die Gänge 22 der Nuten 23 eingelegt. Weitere Lagen werden jeweils in Kreuzwicklung über die erste Lage gelegt. Anschließend wird das Verstärkungselement mit dem Epoxidharz übergossen. Nach dem Erstarren des Kunststoffs bildet dieser das Rohrelement 2 und der Träger wird entfernt.

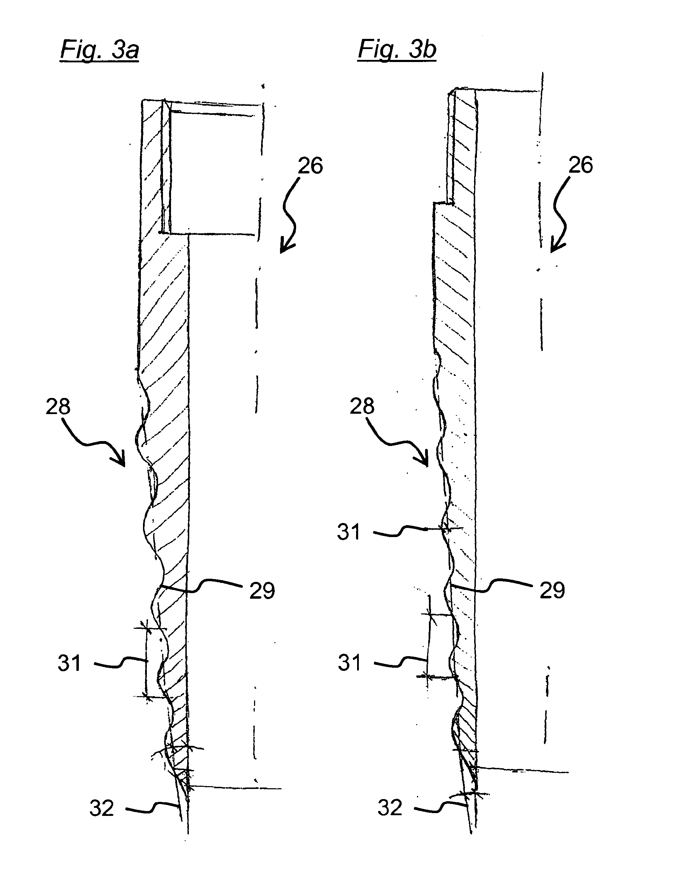

Ein weiteres, nicht dargestelltes erfindungsgemäßes Bohrrohr unterscheidet sich insofern von dem ersten erfindungsgemäßen Bohrrohr 1, als es einen Nenndurchmesser von 250 mm aufweist. Die in den Figuren 3a und 3b dargestellten Adapter 26, 27 des zweiten Bohrrohrs weisen auf dem Verbindungsstutzen 28 jeweils ein Sinusgewinde 29 auf. Das Sinusgewinde weist eine Amplitude 30 von 1,5 mm und eine Steigung 31 von 21 mm auf und verläuft mit einem Konuswinkel 32 von 2° konisch.

In den Figuren sind
- 1: Bohrrohr
- 2: Rohrelement
- 3: Adapter
- 4: Adapter
- 5: Länge
- 6: Kontaktstutzen
- 7: Kontaktstutzen
- 8: Länge
- 9: Innendurchmesser
- 10: Außengewinde
- 11: Innengewinde
- 12: Gewindedurchmesser
- 13: Verbindungsstutzen
- 14: Länge
- 15: Durchmesser
- 16: Konuswinkel
- 17: Durchmesser
- 18: Einschnitt
- 19: Wulst
- 20: Breite
- 21: Abstand
- 22: Gang
- 23: Nut
- 24: Abstand
- 25: Nuttiefe
- 26: Adapter
- 27: Adapter
- 28: Verbindungsstutzen
- 29: Sinusgewinde
- 30: Amplitude
- 31: Steigung
- 32: Konuswinkel

## Patentansprüche

1. Verfahren zum Herstellen eines Bohrrohrs (1), das beim Bohren eines Bohrlochs derart in ein Deckgebirge treibbar ist, dass es das Bohrloch offen hält, wobei das Bohrrohr (1) ein Rohrelement (2) aus Kunststoff aufweist, wobei mittels des Bohrrohrs (1) über einen Adapter (3, 4, 26, 27) aus Metall, der mit dem Rohrelement (2) verbunden ist, weitere Bohrrohre (1) in das Bohrloch treibbar sind, und wobei das Rohrelement (2) mit einem Verbindungsstutzen (13, 28) des Adapters (3, 4, 26, 27) vergossen wird, ***dadurch gekennzeichnet, dass*** vor dem Gießen den Rohrelements (2) mindestens ein textiles Verstärkungselement um den Verbindungsstutzen (13, 28) gelegt und mit dem Kunststoff getränkt wird, wobei der Adapter mindestens eine außen auf dem Verbindungsstutzen (13) umlaufende Wulst (19) aufweist, die mehrfach breiter ist als einer der Gänge (22).

2. Verfahren nach dem vorgenannten Anspruch, ***dadurch gekennzeichnet, dass*** das Verstärkungselement dergestalt auf den Verbindungsstutzen (13, 28) gelegt wird, dass eine Faserrichtung des Verstärkungselements im Wesentlichen parallel zu Gängen (22) mindestens einer außen auf dem Verbindungsstutzen (13, 28) umlaufenden Nut (23) verläuft.

3. Verfahren nach einem der vorgenannten Ansprüche, ***dadurch gekennzeichnet, dass*** das Verstärkungselement in mehreren Lagen übereinander gelegt wird.

4. Adapter (3, 4, 26, 27) für ein Bohrrohr (1), das beim Bohren eines Bohrlochs derart in ein Deckgebirge treibbar ist, dass es das Bohrloch offen hält, wobei das Bohrrohr (1) ein Rohrelement (2) aus Kunststoff aufweist und wobei mittels des Bohrrohrs (1) über den Adapter (3, 4, 26, 27) aus Metall, der mit dem Rohrelement (2) verbunden ist, weitere Bohrrohre (1) in das Bohrloch treibbar sind, mit einem Verbindungsstutzen (13, 28), mit dem das Rohrelement (2) vergießbar ist, und mit mindestens einer außen auf dem Verbindungsstutzen (13, 28) in einer Mehrzahl von parallelen Gängen (22) umlaufenden Nut (23), ***gekennzeichnet durch*** mindestens eine außen auf dem Verbindungsstutzen (13) umlaufende Wulst (19), die mehrfach breiter ist als einer der Gänge (22).

5. Adapter (3, 4, 26, 27) nach dem vorgenannten Anspruch, ***dadurch gekennzeichnet, dass*** eine äußere Umfangsfläche des Verbindungsstutzens (13, 28) konisch verläuft.

6. Bohrrohr (1), das beim Bohren eines Bohrlochs derart in ein Deckgebirge treibbar ist, dass es das Bohrloch offen hält, wobei das Bohrrohr (1) ein Rohrelement (2) aus Kunststoff aufweist und wobei mittels des Bohrrohrs (1) über einen Adapter (3, 4, 26, 27) aus Metall, der mit dem Rohrelement (2) verbunden sind, weitere Bohrrohre (1) in das Bohrloch treibbar sind, ***dadurch gekennzeichnet, dass*** der Adapter (3, 4, 26, 27) nach einem der Ansprüche 4 oder 5 ausgebildet ist.

7. Bohrrohr (1) nach dem vorgenannten Anspruch, ***dadurch gekennzeichnet, dass*** der Adapter (3, 4, 26, 27) mit einem zweiten Adapter (3, 4, 26, 27) an einem zweiten Bohrrohr (1) derart kombinierbar ist, dass das Bohrrohr (1) und das zweite Bohrrohr (1) verdrehfest verbunden sind.

8. Bohrrohr (1) nach dem vorgenannten Anspruch, ***dadurch gekennzeichnet, dass*** der Adapter (3, 4, 26, 27) ein Innengewinde (11) und der zweite Adapter (3, 4, 26, 27) ein mit dem Innengewinde (11) kombinierbares Außengewinde (10) aufweist.

## Claims

1. A method for producing a borehole tube (1) which can be driven into overlying rock during the drilling of a borehole in such a way that it keeps the borehole open, wherein the borehole tube (1) comprises a tube element (2) made of plastic, wherein further borehole tubes (1) can be driven into the borehole by means of the borehole tube (1) via an adapter (3, 4, 26, 27) made of metal which is connected to the tube element (2), and wherein the tube element (2) is cast with a connecting piece (13, 28) of the adapter (3, 4, 26, 27), **characterised in that**, before the casting of the tube element (2), at least one textile reinforcement element is laid around the connecting piece (13, 28) and is impregnated with plastic, wherein the adapter comprises at least one bulge (19) running externally around the circumference on the connecting piece (13), said bulge being several times wider than one of the pitches (22).

2. The method according to the preceding claim, **characterised in that** the reinforcement element is laid on the connecting piece (13, 28) in such a way that a fibre direction of the reinforcement element runs essentially parallel to pitches (22) of at least one groove (23) running externally around the circumference on the connecting piece (13, 28).

3. The method according to any one of the preceding claims, **characterised in that** the reinforcement element is laid in a plurality of layers upon one another.

4. An adapter (3, 4, 26, 27) for a borehole tube (1), which can be driven into overlying rock during the drilling of a borehole in such a way that it keeps the borehole open, wherein the borehole tube (1) comprises a tube element (2) made of plastic and wherein further borehole tubes (1) can be driven into the borehole by means of the borehole tube (1) via an adapter (3, 4, 26, 27) made of metal which is connected to the tube element (2), with a connecting piece (13, 28) with which the tube element (2) can be cast, and with at least one groove (23) running externally around the circumference on the connecting piece (13, 28) in a plurality of parallel pitches (22), **characterised *by*** at least one bulge (19) running externally around the circumference on the connecting piece (13), said bulge being several times wider than one of the pitches (22).

5. The adapter (3, 4, 26, 27) according to the preceding claim, **characterised in that** an external circumferential face of the connecting piece (13, 28) runs conically.

6. A borehole tube (1), which can be driven into overlying rock during the drilling of a borehole in such a way that it keeps the borehole open, wherein the borehole tube (1) comprises a tube element (2) made of plastic and wherein further borehole tubes (1) can be driven into the borehole by means of the borehole tube (1) via an adapter (3, 4, 26, 27) made of metal which is connected to the tube element (2), ***characterised in* that** the adapter (3, 4, 26, 27) is constituted according to any one of claims 4 or 5.

7. The borehole tube (1) according to the preceding claim, ***characterised* in that** the adapter (3, 4, 26, 27) can be combined with a second adapter (3, 4, 26, 27) on a second borehole tube (1) in such a way that the borehole tube (1) and the second borehole tube (1) are connected non-rotatably.

8. The borehole tube (1) according to the preceding claim, ***characterised in* that** the adapter (3, 4, 26, 27) comprises an inner thread (11) and the second adapter (3, 4, 26, 27) comprises an outer thread (10) which can be combined with the inner thread (11).

## Revendications

1. Procédé de fabrication d'un tube de sondage (1) qui peut être mené de telle sorte dans un terrain de couverture pendant le perçage d'un trou de sondage, qu'il laisse le trou de sondage ouvert, sachant que le tube de sondage (1) présente un élément tubulaire (2) en plastique, sachant que via le tube de sondage (1), par un adaptateur (3, 4, 26, 27) en métal relié à l'élément tubulaire (2), d'autres tubes de sondage (1) peuvent être menés dans le trou de sondage, et sachant que l'élément tubulaire (2) est coulé avec une tubulure de liaison (13, 28) de l'adaptateur (3, 4, 26, 27), **caractérisé en ce qu'**avant de couler l'élément tubulaire (2), au moins un élément de renfort textile est posé autour de la tubulure de liaison (13, 28) et imprégné avec le plastique, sachant que l'adaptateur présente au moins un boudin (19) sur le pourtour extérieur de la tubulure de liaison (13) qui fait plusieurs fois la largeur de l'une des spires (22).

2. Procédé selon la revendication 1, **caractérisé en ce que** l'élément de renfort est ainsi posé sur la tubulure de liaison (13, 28) qu'un sens des fibres de l'élément de renfort est essentiellement parallèle à des spires (22) d'au moins une rainure (23) sur le pourtour extérieur de la tubulure de liaison (13, 28).

3. Procédé selon la revendication 1 ou 2, **caractérisé en ce que** l'élément de renfort est posé en plusieurs couches superposées.

4. Adaptateur (3, 4, 26, 27) pour un tube de sondage (1) qui peut être mené de telle sorte dans un terrain de couverture pendant le perçage d'un trou de sondage, qu'il laisse le trou de sondage ouvert, sachant que le tube de sondage (1) présente un élément tubulaire (2) en plastique et sachant que via le tube de sondage (1), par l'adaptateur (3, 4, 26, 27) en métal relié à l'élément tubulaire (2), d'autres tubes de sondage (1) peuvent être menés dans le trou de sondage, avec une tubulure de liaison (13, 28) avec laquelle l'élément tubulaire (2) peut être coulé et avec au moins une rainure (23) sur le pourtour extérieur de la tubulure de liaison (13, 28) dans une pluralité de spires (22) parallèles, **caractérisé par** au moins un boudin (19) sur le pourtour extérieur de la tubulure de liaison (13) qui fait plusieurs fois la largeur de l'une des spires (22).

5. Adaptateur (3, 4, 26, 27) selon la revendication précédente, **caractérisé en ce qu'**une surface périphérique extérieure de la tubulure de liaison (13, 28) est conique.

6. Tube de sondage (1) qui peut être mené de telle sorte dans un terrain de couverture pendant le perçage d'un trou de sondage, qu'il laisse le trou de sondage ouvert, sachant que le tube de sondage (1) présente un élément tubulaire (2) en plastique et sachant que via le tube de sondage (1), par un adaptateur (3, 4, 26, 27) en métal relié à l'élément tubulaire (2), d'autres tubes de sondage (1) peuvent être menés dans le trou de sondage, **caractérisé en ce que** l'adaptateur (3, 4, 26, 27) est formé selon l'une des revendications 4 ou 5.

7. Tube de sondage (1) **caractérisé en ce que** l'adaptateur (3, 4, 26, 27) peut être combiné à un second adaptateur (3, 4, 26, 27) sur un second tube de sondage (1) de telle sorte que le tube de sondage (1) et le second tube de sondage (1) sont reliés en résistance à la torsion.

8. Tube de sondage (1) **caractérisé en ce que** l'adaptateur (3, 4, 26, 27) présente un filetage femelle (11) et que le second adaptateur (3, 4, 26, 27) présente un filetage mâle (10) pouvant être combiné avec le filetage femelle (11).
